# EUROPEAN PATENT APPLICATION

(11) **EP 4 586 168 A1**
(43) Date of publication of application: **16.07.2025**
(21) Application number: 23899084.0
(22) Date of filing: 14.11.2023
(51) Int. Cl.: G06Q 10/109

(54) **WORK MANAGEMENT DEVICE, WORK MANAGEMENT METHOD, AND OPERATOR ASSIGNMENT SYSTEM**

(71) Applicant: Hitachi Systems, Ltd., Tokyo 141-8672 (JP)
(72) Inventor: MAKI, Nobuhiro, Tokyo 141-8672 (JP); NOGUCHI, Takasi, Tokyo 141-8672 (JP); AKIYAMA, Hiroshi, Tokyo 141-8672 (KR); WAKUDA, Kyosuke, Tokyo 141-8672 (JP)
(74) Representative: D Young & Co LLP
(86) International application number: PCT/JP2023/040899
(87) International publication number: WO 2025/104805

(57) **Abstract**

An object is to provide a technique for easily generating a work shift reflecting a desire of a worker.

A work management device includes a storage unit that stores a work list including multiple works in which at least a start time and an end time are specified, worker data including a plurality of workers engaged in any of the works, and work shift data in which the work list and at least one or more workers scheduled to be engaged are associated with each other, a recommendation processing unit that executes, on work for which the worker scheduled to be engaged is insufficient, a process of extracting, as a candidate, a worker who is not scheduled to be engaged in any of the works in the work list on the same day, and a recommendation notification process of inquiring the candidate whether or not to accept engagement in the work, and a vacancy assignment unit that executes a process of receiving a result of the inquiry and including the candidate who has performed the acceptance in the work shift data in association as the worker scheduled to be engaged in the work.

## Description

### Technical Field

The present invention relates to a work management device, a work management method, and a worker assignment system.

### Background Art

With the spread of smartphones and the improvement of network environments, the degree of freedom (time, content, place, and the like) in the way that part-timers (workers) work is increasing. However, although the degree of freedom in ways of working is high, the complexity when a person (for example, a store manager or the like) who requests a task from a part-timer assigns a part-time job is also increasing. That is, the difficulty level of appropriately reflecting a work desire of an individual part-timer in a shift is increasing. As a result, in a predetermined period (one month or the like), the number of attendance days may deviate from the desired number of attendance days.

Patent Literature 1 discloses a shift matching system including a store manager terminal operated by a store manager, a part-timer terminal held by each of a plurality of part-timers, and a server, in which, when a determination signal regarding a date and time and a position as conditions of a necessary part time shift frame is input from the store manager terminal, a part-time job satisfying these conditions is extracted from a part-time job database stored in the server, and an hourly wage corresponding to the part-time job shift frame is calculated based on hourly wage calculation criteria stored in the server, the date and time, the position, and the calculated hourly wage are displayed on the extracted part-time job terminal, and when an approval signal is input from the part-time job terminal to the display, an attendance schedule and the hourly wage of the part-time job with respect to the part-time job shift frame are determined.

### Citation List

### Patent Literature

Patent Literature 1: JP 2022-184655 A

### Summary of Invention

### Technical Problem

In the above system, in a certain period (for example, one month or the like), the number of attendance days of each individual part-timer may deviate from the desired number of attendance days. In addition, since there is no particular allowance for responding to the latest change in the number of people and the human resources of the required skill, responding to the change in the required number of people, or responding to the change in the work demand, the effect in an industry type for such work is limited.

The present invention has been made in view of the above points, and an object of the present invention is to provide a technique for easily generating a work shift reflecting a desire of a worker.

### Solution to Problem

The present application includes a plurality of means for solving at least a part of the above problem, and examples thereof are as follows.

In order to solve the above problem, according to an aspect of the present invention, a work management device includes a storage unit that stores a work list including multiple works in which at least a start time and an end time are specified, worker data including a plurality of workers engaged in any of the works, and work shift data in which the work list and at least one or more workers scheduled to be engaged are associated with each other, a recommendation processing unit that executes, on work for which the worker scheduled to be engaged is insufficient among the works included in the work shift data, a process of extracting, as a candidate, a worker who is not scheduled to be engaged in any of the works in the work list on the same day as either the start time or the end time, and a recommendation notification process of inquiring the candidate whether or not to accept engagement in the work, and a vacancy assignment unit that executes a process of receiving a result of the inquiry and including the candidate who has performed the acceptance in the work shift data in association as the worker scheduled to be engaged in the work.

Further, in the above work management device, the worker data may include information for specifying a skill held by the worker, and the recommendation processing unit may change the work of which a notification is performed, for each candidate according to the held skill in the recommendation notification process.

Further, in the above work management device, the worker data may include information for specifying a residential place of the worker, and the recommendation processing unit may change the work of which a notification is performed, for each candidate according to the residential place in the recommendation notification process.

Further, in the above work management device, the work of the work list may include necessary man-hours of the work, and the recommendation processing unit may determine whether or not the worker for the work is insufficient, by using the necessary man-hours in the process of extracting the candidate.

Further, in the above work management device, the recommendation processing unit may give a priority order to the candidate and perform inquiry of the acceptance or rejection according to the priority order, in the recommendation notification process, and the vacancy assignment unit may include the candidate who has performed the acceptance in the work shift data according to the priority order.

Further, in the above work management device, the recommendation processing unit may give a priority order to the candidate and perform inquiry of the acceptance or rejection by providing a time difference according to the priority order, in the recommendation notification process, and the vacancy assignment unit may include the candidate who has performed the acceptance in the work shift data according to the order of the acceptance.

Further, in the above work management device, the worker data may include an attendance cancellation point held by the worker, the work management device may further comprise a work bias adjustment unit that cancels an engagement schedule of a worker having a small attendance cancellation point among workers scheduled to be engaged in work in which the number of workers scheduled to be engaged is excessive among the works included in the work shift data, in the work, and increases the attendance cancellation point of the worker, and the recommendation processing unit may give a higher priority order to the candidate having a large attendance cancellation point in the recommendation notification process.

Further, in the above work management device, the worker data may include a daily priority attendance cancellation flag held by the worker, the work bias adjustment unit may give the daily priority attendance cancellation flag when increasing the attendance cancellation point of the worker whose work scheduled to be engaged is canceled, and the recommendation processing unit may give the higher priority order to the candidate to whom the daily priority attendance cancellation flag is given than the priority order to the candidate to whom the daily priority attendance cancellation flag is not given, in the recommendation notification process.

Further, in the above work management device, the work bias adjustment unit may refer to the work shift data for a predetermined period, and associate a worker engaged in predetermined specific work in the work shift data to reduce a bias when the predetermined specific work among the works is unevenly distributed among the workers.

Further, according to another aspect of the present invention, there is provided a work management method using a work management device, the work management device including a storage unit that stores a work list including multiple works in which at least a start time and an end time are specified, worker data including a plurality of workers engaged in any of the works, and work shift data in which the work list and at least one or more workers scheduled to be engaged are associated with each other, and a processing unit. The work management method includes, by the processing unit, a step of extracting, as a candidate, a worker who is not scheduled to be engaged in any of the works in the work list on the same day as either the start time or the end time, for work for which the worker scheduled to be engaged is insufficient among the works included in the work shift data, a recommendation notification step of inquiring the candidate whether or not to accept engagement in the work, and a step of receiving a result of the inquiry and including the candidate who has performed the acceptance in the work shift data in association as the worker scheduled to be engaged in the work.

Further, according to still another aspect of the present invention, a worker assignment system causes a computer to receive a work list including multiple works in which at least a start time and an end time are specified, worker data including a plurality of workers engaged in any of the works, and work shift data in which the work list and at least one or more workers scheduled to be engaged are associated with each other, execute, on work for which the worker scheduled to be engaged is insufficient among the works included in the work shift data, a process of extracting, as a candidate, a worker who is not scheduled to be engaged in any of the works in the work list on the same day as either the start time or the end time, and a recommendation notification process of inquiring the candidate whether or not to accept engagement in the work, and execute a process of receiving a result of the inquiry and including the candidate who has performed the acceptance in the work shift data in association as the worker scheduled to be engaged in the work.

### Advantageous Effects of Invention

According to the present invention, it is possible to provide a technique for easily generating a work shift reflecting a desire of a worker.

Note that, problems, configurations, effects, and the like other than the above description will be clarified by the following description of the embodiment.

### Brief Description of Drawings

Fig. 1 is a diagram illustrating an example of an outline of a worker assignment system.
Fig. 2 is a diagram illustrating an example of an embodiment of the worker assignment system.
Fig. 3 is a diagram illustrating an example of worker data.
Fig. 4 is a diagram illustrating an example of work desire data.
Fig. 5 is a diagram illustrating an example of a work list.
Fig. 6 is a diagram illustrating an example of a hardware configuration of a work management device.
Fig. 7 is a diagram illustrating an example of a work shift generation sequence.
Fig. 8 is a diagram illustrating an example of a shift desire registration screen.
Fig. 9 is a diagram illustrating an example of a shift confirmation screen.
Fig. 10 is a diagram illustrating an example of a work shift adjustment sequence.
Fig. 11 is a diagram illustrating an example of a flow of an adjustment-required work extraction process.
Fig. 12 is a diagram illustrating an example of a flow of a recommendation process.
Fig. 13 is a diagram illustrating an example of an attendance acceptance/rejection response screen.
Fig. 14 is a diagram illustrating an example of a recommendation notification.

### Description of Embodiments

Hereinafter, an embodiment will be described with reference to the drawings as an example of the present invention.

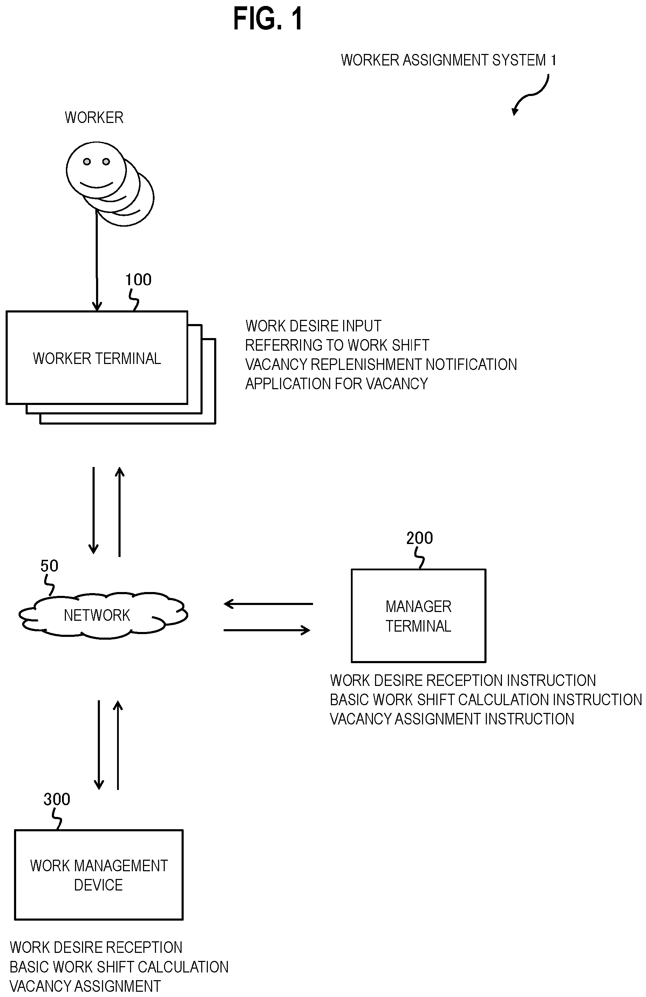

Fig. 1 is a diagram illustrating an example of an outline of a worker assignment system. In the present example, a worker assignment system 1 will be described by using cleaning work (hotels, office buildings, and the like) as a target. A worker and a manager refer to a part-timer and a person who requests a task from a part-timer, respectively. In addition, a facility as a cleaning target is not necessarily a hotel or an office building, and may include various rooms, buildings, structures, signs, and the like. In addition, the worker does not need to be a part-timer in a strict sense, and may be in various employment forms (part-time workers, temporary workers, employed staffs, and the like).

In the worker assignment system 1, a manager inputs target work from a manager terminal 200 to a work management device 300 via a network 50, and a worker inputs a desired work date from a worker terminal 100 to the work management device 300 via the network 50. In this manner, the work management device 300 automatically generates an appropriate work shift (basic work shift). The worker can refer to the own work shift by making an inquiry to the work management device 300 from the worker terminal 100 via the network 50. In addition, the worker terminal 100 can input a work desire, receive a vacancy replenishment notification, and apply for vacant work.

In addition, the manager can input a change or stop of work, a vacancy of a worker, or the like from the manager terminal 200 to the work management device 300 via the network 50 and instruct re-creation of the work shift. When there is an instruction, the work management device 300 extracts a worker, inquires each worker whether or not attendance is accepted, and incorporates the worker who has accepted attendance via the worker terminal 100 into the work shift.

In addition, the manager can instruct the work management device 300 to receive the work desire from the worker from the manager terminal 200 via the network 50, and instruct calculation of the basic work shift according to the work desire.

In addition, the worker terminal 100 and the manager terminal 200 are desirably highly portable information processing devices such as a smartphone, a personal digital assistant (PDA), or a tablet terminal that can communicate with the work management device 300 via the network 50. The functions of the worker terminal 100, the manager terminal 200, and the work management device 300 are implemented by software operating on an operating system (OS).

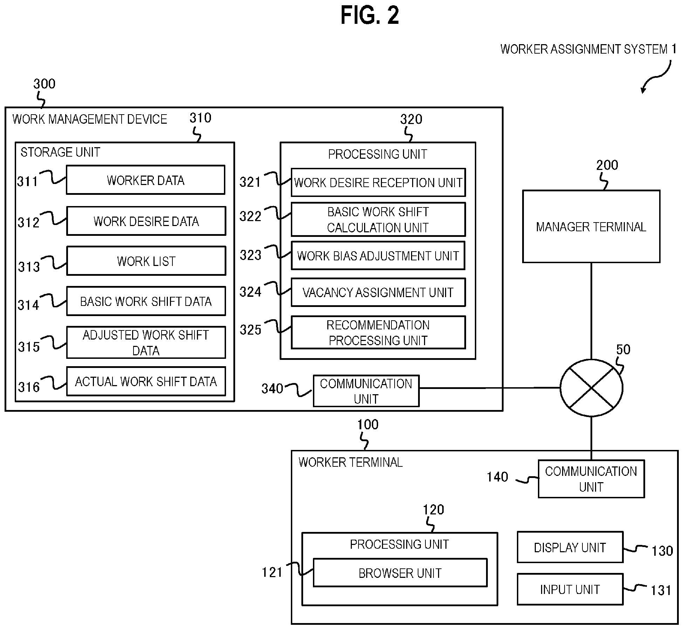

Fig. 2 is a diagram illustrating an example of an embodiment of the worker assignment system. The worker assignment system 1 according to the present embodiment includes the worker terminal 100, the work management device 300 that is communicably connected to the worker terminal 100 via wired or wireless communication, and the manager terminal 200 that is communicably connected to the work management device 300 via the network 50.

The worker terminal 100 is basically an own information processing device carried by the worker. In the present embodiment, a person who uses the worker terminal 100 is a worker (part-timer). The manager terminal 200 is basically an information processing device carried by the manager or an information processing device lent by a company to which the manager belongs for business purposes. In the present embodiment, a person who directly uses the manager terminal 200 is a manager (a person who requests a task from a part-timer).

The network 50 is, for example, a network such as the Internet or an intranet. The network 50 is not limited thereto, and may be a wide area network (WAN), a mobile phone network, or the like, or a communication network in which these networks are combined. Alternatively, the network 50 may be a virtual private network (VPN) or the like on a wireless communication network such as a mobile phone communication network.

The work management device 300 is an information processing device such as a so-called server device. The work management device 300 is connected to the worker terminal 100 and the manager terminal 200 via the network 50.

The worker terminal 100 includes at least a processing unit 120, a display unit 130, an input unit 131, and a communication unit 140. The processing unit 120 includes a browser unit 121 and realizes a so-called web browser function. For example, the processing unit 120 transmits a predetermined uniform resource locator (URL) to the work management device 300, displays a hypertext markup language (HTML) page received as a response, and controls viewing and input.

The manager terminal 200 is basically similar to the worker terminal 100. The work management device 300 includes a storage unit 310, a processing unit 320, and a communication unit 340. The storage unit 310 includes worker data 311, work desire data 312, a work list 313, basic work shift data 314, adjusted work shift data 315, and actual work shift data 316.

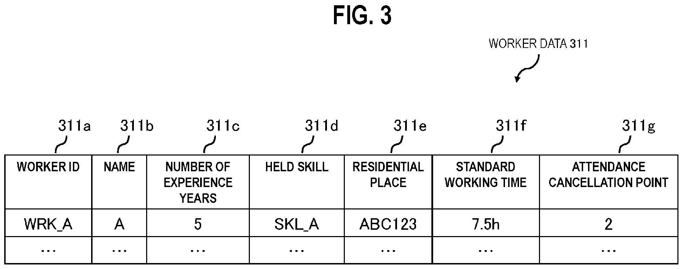

Fig. 3 is a diagram illustrating an example of the worker data. The worker data 311 stores information of a plurality of workers engaged in work. The worker data 311 includes a worker ID 311a, a name 311b, the number of experience years 311c, a held skill 311d, a residential place 311e, a standard working time 311f, and an attendance cancellation point 311g.

The worker ID 311a is information for identifying a worker from other workers. The name 311b is information of the name of the worker. The number of experience years 311c is information of a period during which the worker is engaged in a part-time job. The held skill 311d is information for specifying the qualification and ability of the worker. The residential place 311e is information for specifying a place where the worker lives. The standard working time 311f is information for specifying a normal working time section in which the worker works. The attendance cancellation point 311g is information for specifying an attendance cancellation point given when a work schedule is canceled due to circumstances on the manager side or due to removal of work.

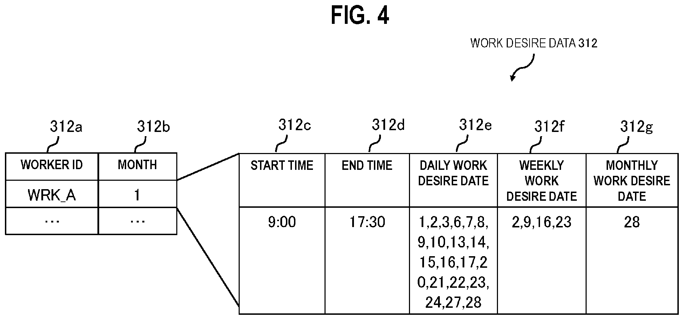

Fig. 4 is a diagram illustrating an example of the work desire data. The work desire data 312 stores information of a work desire of the worker. In the work desire data 312, a start time 312c, an end time 312d, a daily work desire date 312e, a weekly work desire date 312f, and a monthly work desire date 312g are associated with each combination of the worker ID 312a and the month 312b.

The worker ID 312a is information for identifying a worker from other workers. The month 312b is information for specifying a month in which the worker works. The start time 312c and the end time 312d are information for specifying a work start time and a work end time, respectively. The daily work desire date 312e, the weekly work desire date 312f, and the monthly work desire date 312g are information for specifying a date on which it is desired to engage in work that occurs daily, weekly, and monthly, respectively.

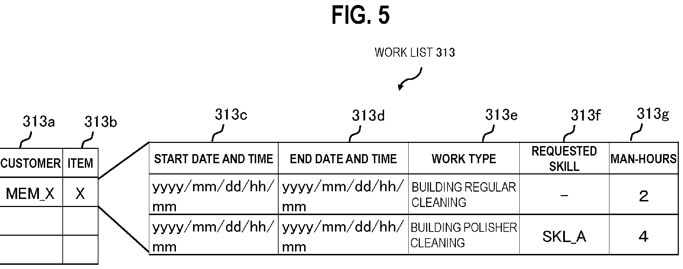

Fig. 5 is a diagram illustrating an example of the work list. The work list 313 stores information of a plurality of works for which at least a start time and an end time are specified. In the work list 313, a start date and time 313c, an end date and time 313d, a work type 313e, a requested skill 313f, and man-hours 313g are associated with each combination of a customer 313a and an item 313b.

The customer 313a is information for identifying a customer, that is, a cleaning destination, from other customers. The item 313b is information for specifying work. The start date and time 313c and the end date and time 313d are information for specifying the date and time of work start and the date and time of work end, respectively. The work type 313e is information of contents for specifying the type of work. The requested skill 313f is information for specifying a skill required for work. The man-hours 313g is information for specifying man-hours (necessary man-hours) required for work.

The description returns to Fig. **2****.** The work shift data refers to information in which the work list 313 and at least one or more workers scheduled to be engaged are associated with each other in a predetermined format. The basic work shift data 314 is information of a state in which the work is associated with the worker within a range of work desires of all workers. The adjusted work shift data 315 is information of a state in which, with respect to the basic work shift data 314, the number of man-hours of the worker or excess/deficiency of the staff is adjusted, and the work is associated with the worker within a range that deviates from a work desired range of the worker but is accepted by the worker. The actual work shift data 316 is past work shift data, and is information of the final state reflecting correction of the work day.

The processing unit 320 implements an application function. The processing unit 320 includes a work desire reception unit 321, a basic work shift calculation unit 322, a work bias adjustment unit 323, a vacancy assignment unit 324, and a recommendation processing unit 325.

Upon receiving a shift creation instruction from the manager terminal 200, the work desire reception unit 321 transmits a notification and screen information for inputting a work desire to the worker terminal 100, and acquires input information of work desire data.

The basic work shift calculation unit 322 assigns work to the worker within a range of the work desire of the worker. For example, the basic work shift calculation unit 322 assigns any work regardless of excess or deficiency of the staff on a day on which the worker desires to work, and does not assign any work regardless of the excess or deficiency of the staff on a day on which the worker does not desire to work. In addition, the basic work shift calculation unit 322 does not assign, to the worker, work for which the worker does not have a necessary held skill.

The work bias adjustment unit 323 cancels a work schedule of the worker having a small attendance cancellation point among workers scheduled to be engaged in work for which the worker scheduled to be engaged is excessive among works included in the work shift data, and increases the attendance cancellation point of this worker. In addition, when increasing the attendance cancellation point of the worker in whom the work scheduled to be engaged is canceled, the work bias adjustment unit 323 gives a daily priority attendance cancellation flag. In addition, the work bias adjustment unit 323 refers to the work shift data for a predetermined period, and associates workers engaged in predetermined specific work in the work shift data to reduce the bias when the predetermined specific work among the works is unevenly distributed among the workers. For example, the work bias adjustment unit 323 totals the actual work shift and the basic work shift that is temporarily calculated such that the work in predetermined special work (for example, cleaning at a site where odor is strong, and cleaning using a special chemical) is not biased among the workers. Then, the work bias adjustment unit 323 calculates a frequency in a predetermined period (for example, one week) for each worker, and replaces assignments of the work.

The vacancy assignment unit 324 executes a process of receiving a result of an inquiry made by the recommendation processing unit 325 to the worker as to whether or not to accept the worker to be engaged in the work, and including a candidate who has performed the acceptance in the work shift data in association with the candidate as the worker scheduled to be engaged in the work. In addition, the vacancy assignment unit 324 includes, in the work shift data, the candidates who have performed the acceptance, according to the priority order (for example, according to the order of acceptance).

The recommendation processing unit 325 executes a process of extracting, as the candidate, a worker who is not scheduled to be engaged in any work in the work list on the same day as either the start time or the end time for work for which the worker scheduled to be engaged is insufficient among the works included in the work shift data. In addition, the recommendation processing unit 325 executes a recommendation notification process of inquiring the candidate whether to accept engagement in the work. In addition, in the recommendation notification process, the recommendation processing unit 325 changes the work for which a notification is performed, for each candidate according to any one or both of the held skill and the residential place. In addition, the recommendation processing unit 325 determines whether or not the work is a work for which the worker is insufficient, by using the necessary man-hours in the process of extracting the candidate.

Furthermore, in the recommendation notification process, the recommendation processing unit 325 gives the priority order to the candidate, and inquires whether or not to accept engagement of work according to the priority order (for example, by providing a time difference according to the priority order). In giving the priority order, the recommendation processing unit 325 gives a higher priority order to a candidate having many attendance cancellation points. In addition, in the recommendation notification process, the recommendation processing unit 325 gives a higher priority order to a candidate to which the daily priority attendance cancellation flag is given than to a candidate to which the daily priority attendance cancellation flag is not given.

The communication unit 340 communicates with other devices via wired communication or wireless communication. For example, the communication unit 340 performs communication via various wired communication cables such as a wired local area network (LAN) cable or radio waves of a wireless LAN.

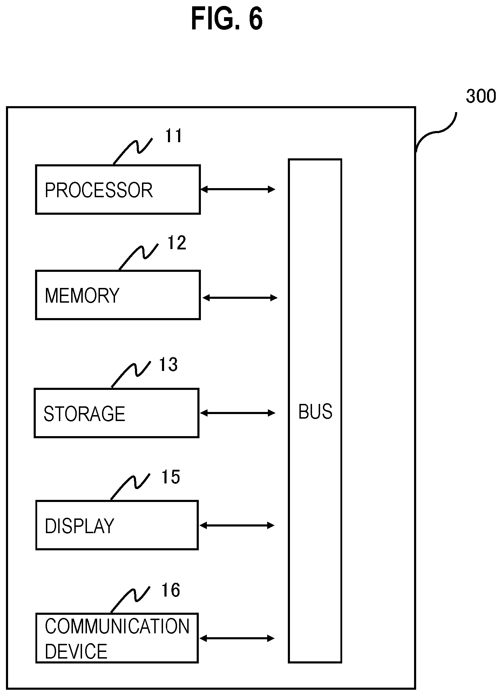

Fig. 6 is a diagram illustrating an example of a hardware configuration of the work management device. The work management device 300 includes a processor 11, a memory 12, a storage 13, a display 15, and a communication device 16, and the components are connected by a bus. Further, a power source may be a primary battery or a rechargeable secondary battery, and can be replaced when consumed or deteriorated.

The processor 11 is an arithmetic device such as a central processing unit (CPU) or a graphics processing unit (GPU), and executes a process according to a program recorded in the memory 12 or the storage 13. In the work management device 300, the process is executed by the processor 11 that operates according to a program read on the memory 12 or the storage 13. The processing unit 320, the work desire reception unit 321, the basic work shift calculation unit 322, the work bias adjustment unit 323, the vacancy assignment unit 324, and the recommendation processing unit 325 implement respective functions by the processor 11 executing programs.

The memory 12 is a storage device such as a random access memory (RAM) or a flash memory, and functions as a storage area from which a program or data is temporarily read. The storage 13 is a writable and readable storage device. The function of the storage unit 310 is implemented by the memory 12 or the storage 13. Note that the function of the storage unit 310 may be implemented by a storage device connected via the communication device 16.

The display 15 is a device that provides an interface for performing input and output, performs an output to the display, and receives an input with a touch panel, a keyboard, or a mouse.

The communication device 16 is an interface for communicably connecting the work management device 300 to an external device. For example, the communication device 16 performs wireless communication using an antenna that can use a predetermined radio wave (for example, 5 GHz band, 2.4 GHz band, and the like) for establishing a connection with the manager terminal 200 according to the Wi-Fi standard.

Note that the process of each component of the work management device 300 may be executed by one piece of hardware or may be executed by a plurality of pieces of hardware. Furthermore, the process of each component of the work management device 300 may be implemented by one program or may be implemented by a plurality of programs.

The manager terminal 200 and the worker terminal 100 have substantially the same hardware configuration as that of the work management device 300, but are often provided with input/output devices such as a touch panel display and a microphone, similarly to a general smartphone.

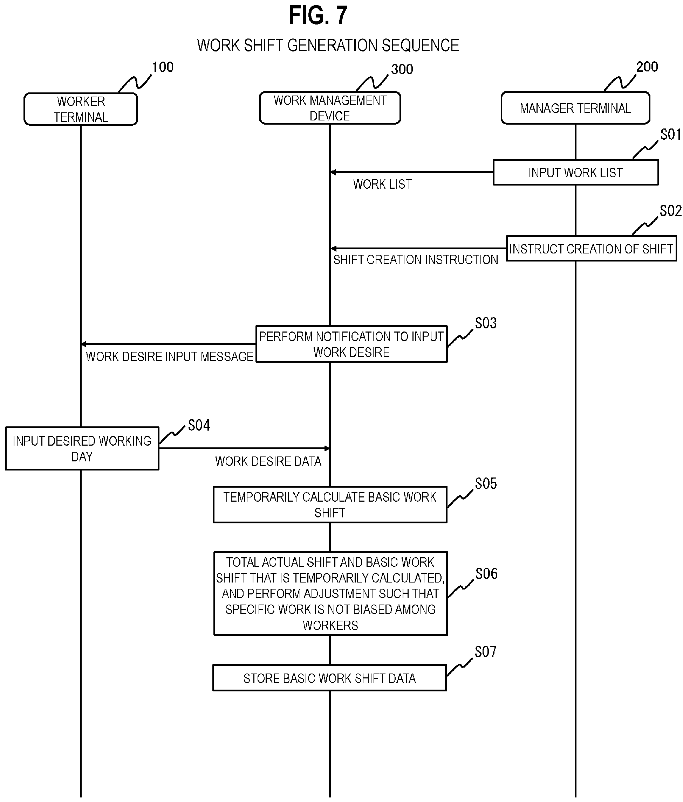

Next, a flow of a process of the worker assignment system 1 will be described. Fig. 7 is a diagram illustrating an example of a work shift generation sequence of the worker assignment system 1. The process of this sequence diagram is a sequence in a case where the work management device 300 automatically generates the basic work shift in accordance with an instruction from the manager terminal 200.

First, the manager terminal 200 transmits information of a work list to the work management device 300 (Step S01). Note that this information may be transmitted at a regular predetermined timing, for example, once a day, once every several days, once a month, or once every several months, or may be transmitted at any timing.

Then, the manager terminal 200 transmits a shift creation instruction to the work management device 300 (Step S02).

Then, the work desire reception unit 321 that has received the shift creation instruction notifies the worker terminal 100 of a work request input message (Step S03). Specifically, upon receiving a shift creation instruction from the manager terminal 200, the work desire reception unit 321 transmits a notification and screen information for inputting a work desire to the worker terminal 100, and receives input information of work desire data 312.

Upon receiving the work desire input message, the browser unit 121 of the worker terminal 100 receives the input of the desired work date from the worker and transmits the input as the work desire data to the work management device 300 (Step S04).

Then, the basic work shift calculation unit 322 refers to the work desire data 312 and temporarily calculates the basic work shift (Step S05). Specifically, the basic work shift calculation unit 322 assigns work to the worker within a range of the work desire of the worker.

Then, the work bias adjustment unit 323 totals the actual shift and the basic work shift that is temporarily calculated and performs adjustment so that the specific work is not biased among the workers (Step S06). Specifically, for example, the work bias adjustment unit 323 totals the actual work shift and the basic work shift that is temporarily calculated such that the work in, for example, cleaning at a site where odor is strong, and cleaning using a special chemical is not biased among the workers. Then, the work bias adjustment unit 323 calculates a frequency in a predetermined period (for example, one week) for each worker, and replaces assignments of the work among the workers. In addition, the work bias adjustment unit 323 may set a combination of workers to be avoided in advance in consideration of congeniality of workers and the like, and, when the combination of the workers to be avoided is the same site group, the site group of one of the workers may be changed to another site group. In this manner, it is possible to reduce the possibility that incompatible workers bowl to the same site.

Then, the basic work shift calculation unit 322 stores the basic work shift in the basic work shift data 314 (Step S07).

The above description is an example of the work shift generation sequence. According to the work shift generation sequence, the manager can generate the work shift reflecting the work desire without adjusting the specific shift frame and the availability of the part-time job.

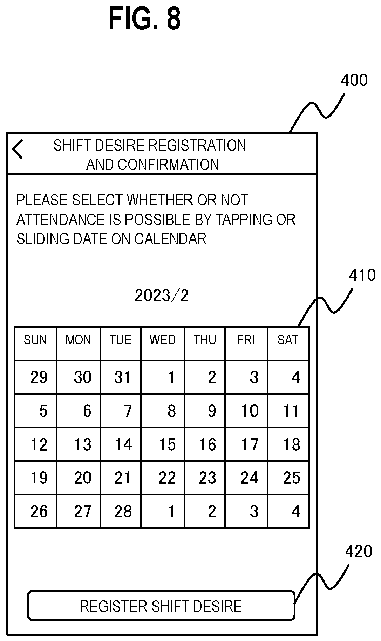

Fig. 8 is a diagram illustrating an example of a shift desire registration screen. A shift desire registration screen 400 is an example of a screen displayed on the worker terminal 100 in Step S04 of the work shift generation sequence. The shift desire registration screen 400 includes, for example, a display area 410 in which the date such as monthly calendar display can be designated and an attendance status can be input, and a registration instruction button 420 for receiving an instruction to transmit the input attendance status information to the work management device 300 as the work desire data.

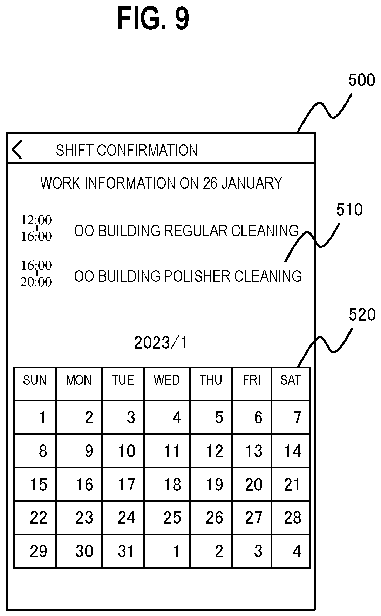

Fig. 9 is a diagram illustrating an example of a shift confirmation screen. A shift confirmation screen 500 is an example of a screen on which the work shift of the worker himself/herself is displayed on the worker terminal 100 with reference to the basic work shift data 314 generated by the work shift generation sequence or the adjusted work shift data 315 when the adjusted work shift data 315 is provided. The shift confirmation screen 500 includes, for example, an information display area 510 of work scheduled to be engaged on the reference day and a date display area 520 in which the date can be designated and input, for example, monthly calendar display. When an input is made in the date display area 520, the work scheduled to be engaged on the date designated in the date display area 520 is displayed in the information display area 510.

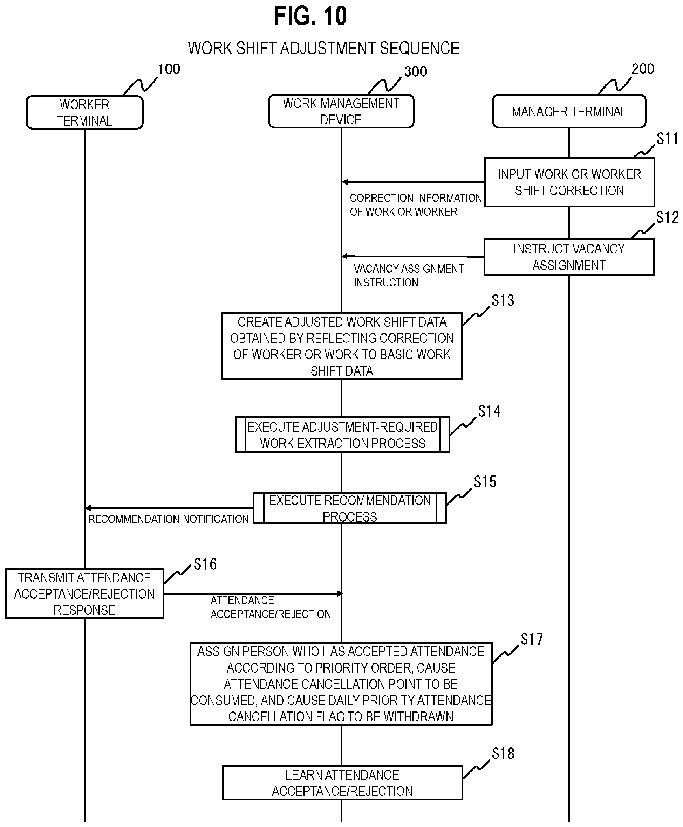

Fig. 10 is a diagram illustrating an example of a work shift adjustment sequence. The process of this sequence diagram is a sequence in a case where the work management device 300 automatically adjusts the work shift in accordance with an instruction from the manager terminal 200.

First, the manager terminal 200 receives an input of shift correction information of work or the worker and transmits the shift correction information to the work management device 300 (Step S11). Note that this information may be transmitted at a regular predetermined timing, for example, once a day, once every several days, once a month, or once every several months, or may be transmitted at any timing (for example, every time the work management device 300 is notified of a report of absence from the worker via the worker terminal 100).

Then, the manager terminal 200 transmits a vacancy assignment instruction to the work management device 300 (Step S12).

Then, the vacancy assignment unit 324 that has received the vacancy assignment instruction creates the adjusted work shift data in which the correction of the worker and the work is reflected in the basic work shift data (Step S13). Specifically, upon receiving the vacancy assignment instruction from the manager terminal 200, the vacancy assignment unit 324 reads the basic work shift data 314 on a day on which change is performed or the adjusted work shift data 315 when the adjusted work shift data 315 is provided. Then, the vacancy assignment unit 324 corrects the content of the target work or the association between the target work and the worker according to the change content.

Then, the work bias adjustment unit 323 executes an adjustment-required work extraction process to be described later, deletes the attendance of the worker from the site where the staff is excessive, and extracts the site where the staff is deficient (Step S14).

Then, the recommendation processing unit 325 performs a process of performing a recommendation process to be described later and extracting a worker who does not perform work on the day as a candidate for a site with the deficient staff (Step S15). In addition, the recommendation processing unit 325 executes a recommendation notification process of inquiring the candidate whether to accept engagement in the work.

Then, the browser unit 121 of the worker terminal 100 of each candidate receives an input of attendance acceptance/rejection from the candidate and transmits a response to the work management device 300 (Step S16). Note that, when there are multiple works as a vacancy assignment target, the browser unit 121 can transmit, as a response, the attendance acceptance/rejection for any one or multiple works as long as the works are performed at non-overlapping times among the works, or can reject any work as a response.

Then, the vacancy assignment unit 324 assigns an attendance acceptor according to the priority order given in a recommendation process, causes the attendance cancellation points to be consumed, and causes the daily priority attendance cancellation flag to be withdrawn (Step S17).

Then, the recommendation processing unit 325 learns the attendance acceptance/rejection for each candidate (Step S18). Specifically, in the subsequent recommendation process, the recommendation processing unit 325 calculates an acceptance rate (the number of times of acceptance/the number of times of recommendation notification) for each worker so as to increase the probability of compensating the worker for absence, and sets the priority order to be high when a worker with a high acceptance rate is selected as a candidate. Alternatively, the recommendation processing unit 325 may increase the attendance cancellation point for a worker with a relatively high acceptance rate.

The above description is an example of the work shift adjustment sequence. According to the work shift adjustment sequence, the manager can assign a vacancy without adjusting a specific shift frame and the availability of a part-time job.

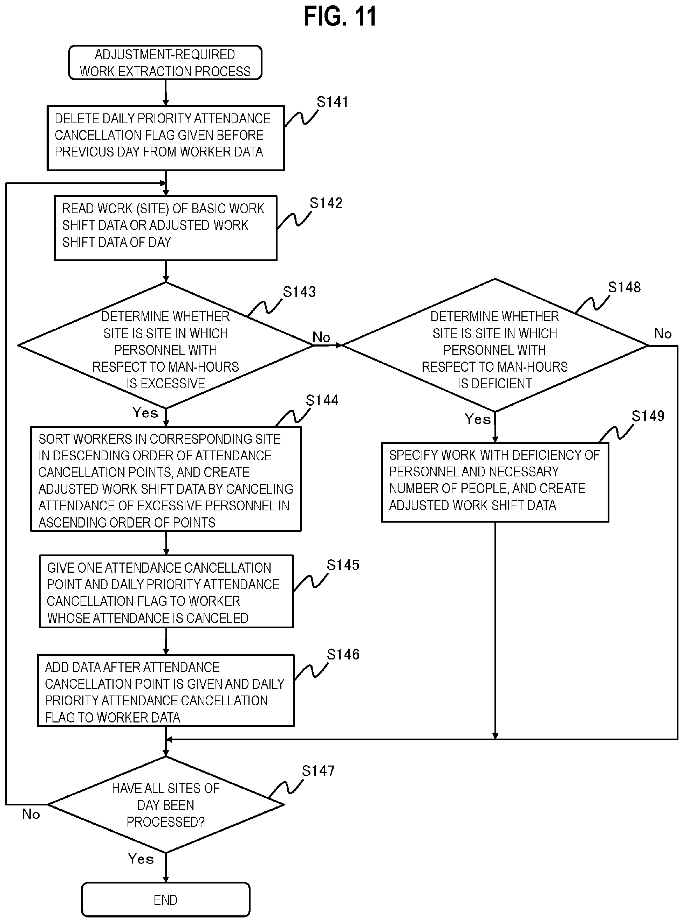

Fig. 11 is a diagram illustrating an example of a flow of the adjustment-required work extraction process. The adjustment-required work extraction process is a process of deleting the attendance of the worker from the site where the staff is excessive and extracting the site where the staff is deficient. The adjustment-required work extraction process is started in Step S14 of the work shift adjustment sequence.

First, the work bias adjustment unit 323 deletes the daily priority attendance cancellation flag given before the previous day from the worker data (Step S141).

Then, the work bias adjustment unit 323 reads the work (site) of the basic work shift data 314 or the adjusted work shift data 315 of the day (Step S142). Note that, if there is the adjusted work shift data 315 of the day, the work bias adjustment unit 323 reads the adjusted work shift data 315 because the adjusted work shift data indicates a more recent state than the basic work shift data 314.

Then, the work bias adjustment unit 323 determines whether or not the site is a site in which the staff with respect to the man-hours is excessive (Step S143). When the site is not a site in which the staff with respect to the man-hours is excessive (in the case of "No" in Step S143), the work bias adjustment unit 323 causes the control to proceed to Step S148 to be described later. Note that the work bias adjustment unit 323 determines the excess of the staff by referring to the man-hours 313g of the work list 313.

When the site is a site in which the staff with respect to the man-hours is excessive (in the case of "Yes" in Step S143), the work bias adjustment unit 323 sorts the workers in the site in the descending order of the attendance cancellation points, and creates the adjusted work shift data 315 by canceling the attendance of the excessive staff in the ascending order of the points (Step S144).

Then, the work bias adjustment unit 323 gives one attendance cancellation point and a daily priority attendance cancellation flag to the worker whose attendance is canceled (Step S145).

Then, the work bias adjustment unit 323 adds the data after the attendance cancellation point is given and the daily priority attendance cancellation flag to the worker data (Step S146).

Then, the work bias adjustment unit 323 determines whether or not all the sites of the day have been processed (Step S147). When not all the sites of the day have been processed (in the case of "No" in Step S147), the work bias adjustment unit 323 causes the control to return to S142. When all the sites of the day have been processed (in the case of "Yes" in Step S147), the work bias adjustment unit 323 ends the adjustment-required work extraction process.

When the site is not a site in which the staff with respect to the man-hours is excessive (in the case of "No" in Step S143), the work bias adjustment unit 323 determines whether or not the site is a site in which the staff with respect to the man-hours is deficient (Step S148). When the site is not a site in which the staff with respect to the man-hours is deficient (in the case of "No" in Step S148), the work bias adjustment unit 323 causes the control to proceed to the control to Step S147 to be described later. Note that the work bias adjustment unit 323 determines the excess of the staff by referring to the man-hours 313g of the work list 313.

When the site is a site in which the staff with respect to the man-hours is deficient (in the case of "Yes" in Step S148), the work bias adjustment unit 323 specifies the work with the deficiency of the staff and the necessary number of people, and creates the adjusted work shift data 315 (Step S149). Then, the work bias adjustment unit 323 causes the control to proceed to Step S147.

The above description is an example of the flow of the adjustment-required work extraction process. According to the adjustment-required work extraction process, it is possible to delete the attendance of the worker from the site where the staff is excessive and extract the site where the staff is deficient.

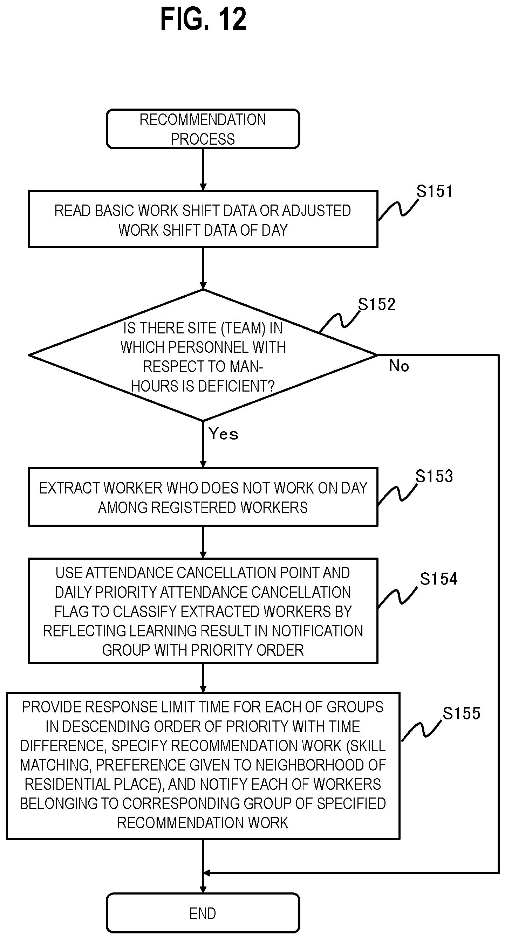

Fig. 12 is a diagram illustrating an example of a flow of the recommendation process. The recommendation process is a process of extracting a worker who does not work on the day as a candidate and notifying the worker to a site where the staff is deficient. The recommendation process is started in Step S15 of the work shift adjustment sequence.

First, the recommendation processing unit 325 reads the work (site) of the basic work shift data 314 or the adjusted work shift data 315 of the day (Step S151). Note that, if there is the adjusted work shift data 315 of the day, the recommendation processing unit 325 reads the adjusted work shift data 315 because the adjusted work shift data indicates a more recent state than the basic work shift data 314.

Then, the recommendation processing unit 325 determines whether there is a site in which the staff with respect to the man-hours is deficient (Step S152). When there is no site in which the staff with respect to the man-hours is deficient (in the case of "No" in Step S152), the recommendation processing unit 325 ends the recommendation process. Note that the recommendation processing unit 325 determines the excess of the staff by referring to the man-hours 313g of the work list 313.

When there is a site in which the staff with respect to the man-hours is deficient (in the case of "Yes" in Step S152), the recommendation processing unit 325 extracts a worker who does not work on the day among the registered workers (Step S153). Specifically, the recommendation processing unit 325 extracts, as the candidate, a worker who is not scheduled to be engaged in any of the works in the work list 313 on the same day as either the start time or the end time for the work for which the worker is insufficient.

Then, the recommendation processing unit 325 uses the attendance cancellation point and the daily priority attendance cancellation flag to classify the extracted workers by reflecting a learning result in a notification group with the priority order (Step S154). The learning result refers to the priority order or the attendance cancellation point set in Step S18 of the work shift adjustment sequence. The recommendation processing unit 325 gives a higher priority order to a candidate having large attendance cancellation points. In addition, the recommendation processing unit 325 gives a higher priority order to a candidate to which the daily priority attendance cancellation flag is given than to a candidate to which the daily priority attendance cancellation flag is not given. Alternatively, the recommendation processing unit 325 may calculate the attendance cancellation point higher by a predetermined amount for the candidate to which the daily priority attendance cancellation flag is given.

For example, in the notification group, for example, workers with three or more attendance cancellation points or workers with the daily priority attendance cancellation flag can be provided as a group A, workers with 1 to 2 attendance cancellation points can be provided as a group B, and workers with 0 attendance cancellation points can be provided as a group C, and the priority of the group A can be set to a first rank, the group B can be set to a second rank, and the group C can be set to a third rank.

Then, the recommendation processing unit 325 provides a response limit time for each of the groups in descending order of priority with a time difference, and specifies the recommendation work (skill matching, preference given to neighborhood of residential place) and notifies each of the workers belonging to the corresponding group of the specified recommendation work (Step S155). Specifically, the recommendation processing unit 325 provides the response limit time of, for example, 25 minutes to each of the groups in descending order of priority with a time difference of, for example, 30 minutes, and performs the recommendation notification. In addition, in the recommendation notification process, the recommendation processing unit 325 changes the work for which a notification is performed, for each candidate according to any one or both of the held skill and the residential place. Specifically, the recommendation processing unit 325 excludes, for each candidate, work that does not match the held skill from work as a recommendation target. In addition, the recommendation processing unit 325 sorts the work sites in order of proximity to the residential place and performs a notification of the work sites.

The above description is an example of the flow of the recommendation process. According to the recommendation process, it is possible to inquire of the candidate as to whether or not to accept the engagement in the work with a predetermined priority order. Therefore, it is possible to preferentially select a worker whose working days have decreased as an additional staff candidate, and it is possible to increase a sense of satisfaction of the worker.

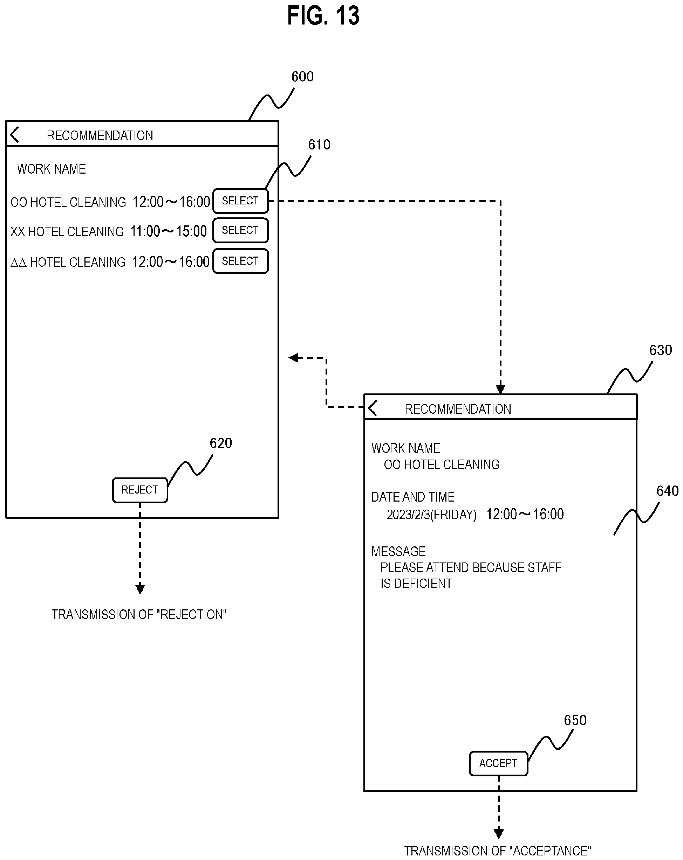

Fig. 13 is a diagram illustrating an example of an attendance acceptance/rejection response screen. An attendance acceptance/rejection response screen 600 is an example of a screen displayed on the worker terminal 100 in Step S16 of the work shift adjustment sequence. The attendance acceptance/rejection response screen 600 includes a selection button 610 that enables selection input for each work and a rejection button 620 that receives an input of an intention to reject all works. Upon receiving the input, the rejection button 620 transmits, to the work management device 300, a response indicating that the worker does not attend for any of the presented works. Upon receiving the input, the selection button 610 transitions to a detail display screen 630 of the corresponding work. The detail display screen 630 includes a work detailed information display area 640 including a work name, a work date and time, and a supplementary message, and an acceptance button 650 for receiving an input of an intention to accept attendance. Upon receiving the input, the acceptance button 650 transmits, to the work management device 300, a response indicating that the attendance for the presented work is accepted.

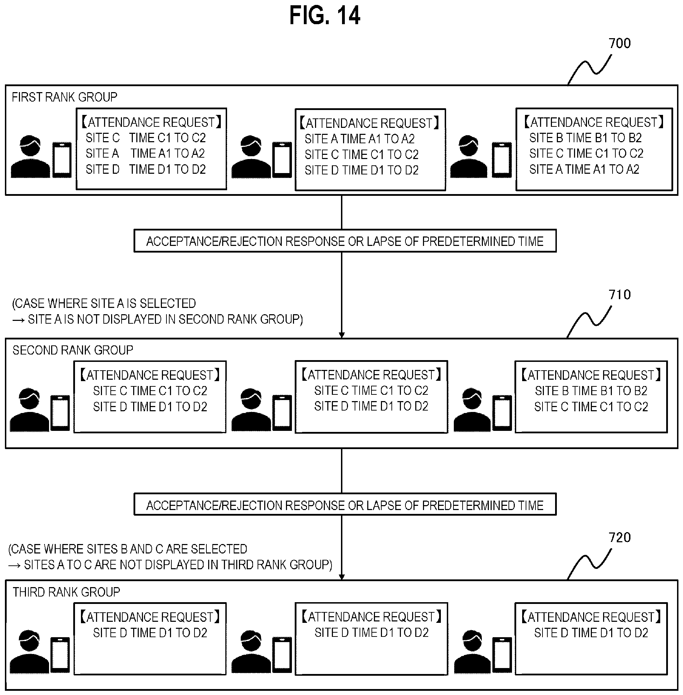

Fig. 14 is a diagram illustrating an example of the recommendation notification. In the recommendation notification, work is proposed to the candidate according to the order. For example, when the worker belonging to a group 700 having the first priority order is notified of the work at sites A to D, the work that does not satisfy the skill is excluded from each worker, and the work is proposed by being sorted in the order of sites close to the residential place.

Then, when the work at the "site A" is accepted by any of the workers belonging to the first group 700 having the first priority order, the workers belonging to a group 710 having the second rank are notified of works at the sites B to D. That is, the work at the site A is not displayed to the candidates in the second rank group.

Then, when the works at the "site B" and the "site C" are accepted by any of the workers belonging to the group 710 of the second priority order, the worker belonging to a group 720 having the third rank is notified of the work at the site D. That is, the work at the sites A to C is not displayed for the candidates in the third rank group.

Although the embodiment according to the present invention has been described above, the present invention is not limited to the example of the above-described embodiment, and includes various modifications. For example, in the above embodiment, in the selection of the notification group of the recommendation notification, the process in particular in consideration of the compatibility or the like of the worker is not executed, but the present invention is not limited thereto, and the compatibility or the like of the worker may be considered. Specifically, a combination of workers to be avoided may be set in advance, and the notification group may be corrected in Step S154 of the recommendation process. For example, when the combination of workers to be avoided is in the same notification group, the notification group of one of the workers may be changed to another notification group. In this manner, even in the case of emergency attendance, it is possible to reduce the possibility that incompatible workers bowl to the same site.

In addition, for example, in the above embodiment, in the selection of the notification group of the recommendation notification, the process in particular in consideration of the target income or the like of the worker is not executed, but the present invention is not limited thereto, and the target income or the like of the worker may be considered. Specifically, when the notification group is divided (Step S154), or in the process of Step S06 in which the actual shift and the basic work shift that is temporarily calculated are totaled and adjustment is performed such that the specific work is not biased among the workers, for example, a target monthly income may be set in advance for each worker, and the work bias adjustment unit 323 may assign the work preferentially to the worker whose actual income deviates from the target monthly income. In this manner, for example, the work can be preferentially assigned to the worker A who has not achieved the monthly target income against the worker B who has achieved the monthly target income, and it is possible to meet the desire of the worker.

The examples of the above-described embodiment have been described in detail in order to facilitate understanding of the present invention, and the present invention is not limited to those having all the configurations described herein. In addition, a part of a configuration of an example of a certain embodiment can be replaced with a configuration of another example. In addition, a configuration of another example can be added to a configuration of an example of a certain embodiment. In addition, a part of a configuration of an example of each embodiment can be added, deleted, or replaced with another configuration. In addition, some or all of the above-described configurations, functions, processing units, processing means, and the like may be realized by hardware, for example, by designing with an integrated circuit. In addition, control lines and information lines in the drawings indicate what is considered to be necessary for description, and do not necessarily indicate all of them. It may be considered that almost all the configurations are connected to each other.

### Reference Signs List

- 1: WORKER ASSIGNMENT SYSTEM
- 50: NETWORK
- 100: WORKER TERMINAL
- 120: PROCESSING UNIT
- 121: BROWSER UNIT
- 130: DISPLAY UNIT
- 131: INPUT UNIT
- 140: COMMUNICATION UNIT
- 200: MANAGER TERMINAL
- 300: WORK MANAGEMENT DEVICE
- 310: STORAGE UNIT
- 311: WORKER DATA
- 312: WORK DESIRE DATA
- 313: WORK LIST
- 314: BASIC WORK SHIFT DATA
- 315: ADJUSTED WORK SHIFT DATA
- 316: ACTUAL WORK SHIFT DATA
- 320: PROCESSING UNIT
- 321: WORK DESIRE RECEPTION UNIT
- 322: BASIC WORK SHIFT CALCULATION UNIT
- 323: WORK BIAS ADJUSTMENT UNIT
- 324: VACANCY ASSIGNMENT UNIT
- 325: RECOMMENDATION PROCESSING UNIT
- 340: COMMUNICATION UNIT

## Claims

1. A work management device comprising:
a storage unit that stores a work list including multiple works in which at least a start time and an end time are specified, worker data including a plurality of workers engaged in any of the works, and work shift data in which the work list and at least one or more workers scheduled to be engaged are associated with each other;
a recommendation processing unit that executes, on work for which the worker scheduled to be engaged is insufficient among the works included in the work shift data, a process of extracting, as a candidate, a worker who is not scheduled to be engaged in any of the works in the work list on the same day as either the start time or the end time, and a recommendation notification process of inquiring the candidate whether or not to accept engagement in the work; and
a vacancy assignment unit that executes a process of receiving a result of the inquiry and including the candidate who has performed the acceptance in the work shift data in association as the worker scheduled to be engaged in the work.

2. The work management device according to claim **1,** wherein
the worker data includes information for specifying a skill held by the worker, and
the recommendation processing unit changes the work of which a notification is performed, for each candidate according to the held skill in the recommendation notification process.

3. The work management device according to claim **1,** wherein
the worker data includes information for specifying a residential place of the worker, and
the recommendation processing unit changes the work of which a notification is performed, for each candidate according to the residential place in the recommendation notification process.

4. The work management device according to claim **1,** wherein
the work of the work list includes necessary man-hours of the work, and
the recommendation processing unit determines whether or not the worker for the work is insufficient, by using the necessary man-hours in the process of extracting the candidate.

5. The work management device according to claim **1,** wherein
the recommendation processing unit gives a priority order to the candidate and performs inquiry of the acceptance or rejection according to the priority order, in the recommendation notification process, and
the vacancy assignment unit includes the candidate who has performed the acceptance in the work shift data according to the priority order.

6. The work management device according to claim **1,** wherein
the recommendation processing unit gives a priority order to the candidate and performs inquiry of the acceptance or rejection by providing a time difference according to the priority order, in the recommendation notification process, and
the vacancy assignment unit includes the candidate who has performed the acceptance in the work shift data according to the order of the acceptance.

7. The work management device according to claim 5 or 6**,** wherein
the worker data includes an attendance cancellation point held by the worker,
the work management device further comprises:
a work bias adjustment unit that cancels an engagement schedule of a worker having a small attendance cancellation point among workers scheduled to be engaged in work in which the number of workers scheduled to be engaged is excessive among the works included in the work shift data, in the work, and increases the attendance cancellation point of the worker, and
the recommendation processing unit gives a higher priority order to the candidate having a large attendance cancellation point in the recommendation notification process.

8. The work management device according to claim 7, wherein
the worker data includes a daily priority attendance cancellation flag held by the worker,
the work bias adjustment unit gives the daily priority attendance cancellation flag when increasing the attendance cancellation point of the worker whose work scheduled to be engaged is canceled, and
the recommendation processing unit gives the higher priority order to the candidate to whom the daily priority attendance cancellation flag is given than the priority order to the candidate to whom the daily priority attendance cancellation flag is not given, in the recommendation notification process.

9. The work management device according to claim 7, wherein
the work bias adjustment unit refers to the work shift data for a predetermined period, and associates a worker engaged in predetermined specific work in the work shift data to reduce a bias when the predetermined specific work among the works is unevenly distributed among the workers.

10. A work management method using a work management device,
the work management device including
a storage unit that stores a work list including multiple works in which at least a start time and an end time are specified, worker data including a plurality of workers engaged in any of the works, and work shift data in which the work list and at least one or more workers scheduled to be engaged are associated with each other, and a processing unit,
the work management method comprising:
by the processing unit,
a step of extracting, as a candidate, a worker who is not scheduled to be engaged in any of the works in the work list on the same day as either the start time or the end time, for work for which the worker scheduled to be engaged is insufficient among the works included in the work shift data;
a recommendation notification step of inquiring the candidate whether or not to accept engagement in the work; and
a step of receiving a result of the inquiry and including the candidate who has performed the acceptance in the work shift data in association as the worker scheduled to be engaged in the work.

11. A worker assignment system causing a computer to:
receive a work list including multiple works in which at least a start time and an end time are specified, worker data including a plurality of workers engaged in any of the works, and work shift data in which the work list and at least one or more workers scheduled to be engaged are associated with each other;
execute, on work for which the worker scheduled to be engaged is insufficient among the works included in the work shift data, a process of extracting, as a candidate, a worker who is not scheduled to be engaged in any of the works in the work list on the same day as either the start time or the end time, and a recommendation notification process of inquiring the candidate whether or not to accept engagement in the work; and
execute a process of receiving a result of the inquiry and including the candidate who has performed the acceptance in the work shift data in association as the worker scheduled to be engaged in the work.
